# EUROPEAN PATENT APPLICATION

(11) **EP 4 322 697 A2**
(43) Date of publication of application: **14.02.2024**
(21) Application number: 23219238.5
(22) Date of filing: 11.10.2019
(51) Int. Cl.: H04W 76/15

(54) **BASE STATION**

(62) Divisional of application: 19948519.4
(71) Applicant: NTT DOCOMO, INC., Tokyo 100-6150 (JP)
(72) Inventor: Toeda, Teruaki, Tokyo, 100-6150 (JP); Min, Tianyang, Tokyo, 100-6150 (JP)
(74) Representative: Hoffmann Eitle

(57) **Abstract**

A base station comprising a control section that starts controlling a first measurement triggered by reception of a first message including parameters of the first measurement; and a transmitting section that instructs another base station to start controlling a second measurement by transmitting a second message including parameters of the second measurement to the another base station, wherein, the second message includes a parameter indicating a log interval of the second measurement and a parameter indicating a log period of the second measurement.

## Description

### Technical Field

The present disclosure relates to a base station.

### Background Art

Long Term Evolution (LTE) has been specified for achieving a higher data rate, lower Latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

### Citation List

### Non-Patent Literature

NPL 1
   3GPP TS 36.314 V15.2.0 (2018-12)
NPL 2
   3GPP TR 37.816 V16.0.0 (2019-07)
NPL 3
   3GPP TS 32.422 V15.2.0 (2019-06)
NPL 4
   3GPP TS 36.423 V15.7.0 (2019-09)

### Summary of Invention

### Technical Problem

In LTE, Layer 2 (L2) measurement (L2 measurement) for measuring a predetermined parameter representing a channel state is specified (see Non-Patent Literature (hereinafter referred to as "NPL") 1).

Also in NR, a discussion on the L2 measurement has been made (see NPL 2). In addition, in NR, dual connectivity (DC) is introduced.

However, there is scope for further study on issues relevant to the L2 measurement for DC.

An objective of the present disclosure is to improve the L2 measurement for DC.

### Solution to Problem

Abase station according to one aspect of the present disclosure includes: a control section that controls a start time of a first measurement relevant to a first radio connection to a terminal based on an instruction on measurement; and a transmission section that transmits time information indicating the start time of the first measurement to another base station that performs a second measurement relevant to a second radio connection to the terminal.

### Advantageous Effects of Invention

According to the present disclosure, it is possible to improve the L2 measurement for DC.

### Brief Description of Drawings

FIG. 1 is a block diagram illustrating an exemplary configuration of a base station;
FIG. 2 is a block diagram illustrating an exemplary configuration of a terminal;
FIG. 3 illustrates an example of a configuration of a radio communication system; and
FIG. 4 illustrates an exemplary hardware configuration of the base station and the terminal.

### Description of Embodiments

### <Findings Leading to Present Disclosure>

### (Background 1)

In L2 measurement of legacy LTE, the following parameters are measured (see NPL 1):
- PRB usage;
- Number of active UEs;
- Packet delay;
- Data loss;
- Scheduled IP Throughput;
- Scheduled IP Throughput for MDT;
- Data volume;
- Data volume for Shared Networks;
- Distribution of PRB usage; and
- Distribution of scheduled IP throughput.

Among these parameters, the four parameters of Schedule IP Throughput, Schedule IP Throughput for MDT, Data Volume, and Distribution of Schedule IP Throughput are measured per UE.

Note that, "PRB" is an abbreviation of Physical Resource Block(s), "UE" is an abbreviation of User Equipment, "IP" is an abbreviation of Internet Protocol, and MDT is an abbreviation of Minimization of Drive Tests.

### (Background 2)

3GPP RAN2 SON/MDT WI has been discussing issues relevant to the L2 measurement. Note that "SON" is an abbreviation of Self-management Networks, and "WI" is an abbreviation of Working Item.

For example, in Section 6.2.2 "L2 measurement quantities" of NPL 2, introducing measurements of the following parameters into NR is studied:
- Received random access preambles;
- Number of users for RRC_CONNECTED; and
- Number of users for RRC_INACTIVE.

In addition, in Section 6.2.2 "L2 measurement quantities" of NPL 2, using a measurement defined in SA5 for the measurement of the following parameters instead of the measurement defined in NPL 1 is studied:
- PRB usage;
- Packet delay;
- Data loss;
- Scheduled IP Throughput;
- Scheduled IP Throughput for MDT;
- Data volume; and
- Distribution of scheduled IP throughput.

Note that "SA5" is an abbreviation of System Aspects group 5.

### (Background 3)

In NR, DC is introduced in which a master node (MN) and a slave node (SN) are simultaneously connected to an UE.

In a DC state, the start of L2 measurement is triggered by an upper node (e.g., MME or AMF) for the MN. The term "MME" is an abbreviation of Mobility Management Entity and "AMF" is an abbreviation of Access and Mobility Management Function.

A Trace Start message (hereinafter referred to as "first message") may be used to trigger the L2 measurement for the MN. The first message is transmitted by the upper node to the MN via an interface expressed as S1-MME or ng-C.

The first message includes the following parameters (see Section 4.1.2.12.3 "Activation of MDT task after UE attachment" of NPL 3):
- Area scope (TA, Cell);
- Trace Reference;
- Trace Recording Session Reference;
- List of measurements;
- Reporting Trigger;
- Report Amount;
- Report Interval;
- Event Threshold;
- Logging Interval;
- Logging Duration;
- IP address of Trace Collection Entity;
- Measurement period LTE;
- Positioning method;
- Collection period for RRM measurements LTE; and
- MDT PLMN List.

Note that "PLMN" is an abbreviation of Public Land Mobile Network.

In addition, when starting the L2 measurement, the MN notifies the SN of a Trace Start message (hereinafter referred to as "second message") (see Section 9.1.4.28 "TRACE START" of NPL 4). An interface expressed, for example, as Xn-C may be used for notification of the second message.

A command of Trace Activation of the second message includes MDT configuration information. In the MDT configuration information, the measurement parameters of M1 to M5 (see Section 5.10.3 "List of measurements" of NPL 3) are indicated by a bitmap (see Section 9.2.56 "MDT Configuration" of NPL 4). Among M1 to M5, M4 and M5 are the parameters for L2 measurement.
- M1: RSRP and RSRQ measurement by UE
- M2: Power Headroom (PH) measurement by UE
- M3: Received interference power measurement by a base station
- M4: Data volume measurement, separately for DL and UL, by a base station
- M5: Scheduled IP throughput measurement, separately for DL and UL, by a base station

Note that "MAC" is an abbreviation of Medium Access Control. The term "DL" is an abbreviation of downlink and "UL" is an abbreviation of uplink. The term "RSRP" is an abbreviation of Reference Signals Received Power and "RSRQ" is an abbreviation of Reference Signal Received Quality.

Regarding the above-mentioned four parameters measured for each UE, there is scope for further study on how to synchronize a measurement timing between the MN and the SN and how to collate measurement results of the MN and the SN. Note that the term "collation" may be replaced with terms such as "match," "mapping," and "alignment," for example.

Here, "collation" has an important meaning in the following respects: A measurer is the MN and the SN, and a measurement target is per UE. That is, there is an advantage that, when both the MN and the SN perform measurement on one UE, the reliability of the measurement results can be grasped by collating the measurement results of the MN and the SN. For example, when an inconsistency is confirmed as a result of the collation, it is possible to determine that some trouble has occurred in the measurement of the MN and the SN, and to take care of the measurement results (e.g., not to use and/or accumulate the measurement results).

The present embodiment offers one proposal relevant to the aforementioned scope for further study.

An embodiment of the present invention will be described below with appropriate reference to the accompanying drawings. The same elements are denoted by the same reference numerals throughout the present specification unless otherwise specified. The following descriptions given in conjunction with the accompanying drawings are for explaining an exemplary embodiment but not for specifying the only embodiment. For example, in the case where the order of operations is described in the embodiment, the order of the operations may be appropriately changed as long as no inconsistency occurs in the operations as a whole.

When a plurality of embodiments and/or modifications are illustrated, some configurations, functions and/or operations in a certain embodiment and/or modification may be included in other embodiments and/or modifications, or may be replaced by corresponding configurations, functions and/or operations of other embodiments and/or modifications as long as no inconsistency occurs.

In addition, in the embodiment, an unnecessarily detailed description may be omitted. For example, detailed descriptions of publicly known or well-known technical matters may be omitted in order to avoid unnecessarily redundant descriptions and/or obscuring technical matters or concepts, so as to facilitate understanding by those skilled in the art. In addition, duplicate descriptions of substantially the same configurations, functions, and/or operations may be omitted.

The accompanying drawings and the following description are provided to assist those skilled in the art to understand the embodiment, but are not intended to limit the claimed subject. In addition, the terms used in the following description may be appropriately replaced with other terms to aid the understanding of those skilled in the art.

### <Configuration of Base Station>

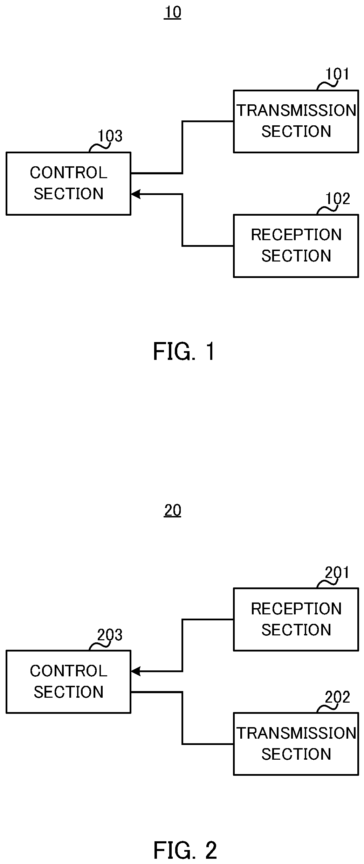

FIG. 1 is a block diagram illustrating an example of a configuration of base station 10. Base station 10 may correspond to an eNB (LTE base station) or a gNB (NR base station). Base station 10 may be connected to another base station by an inter-base-station interface. Base station 10 may also be connected to an upper node. Examples of the upper node include the MME/AMF and a TCE. Note that "TCE" is an abbreviation of Trace Collection Entity. The term "MME/AMF" is a convenient expression for representing at least one of the MME and the AMF.

Base station 10 may also be connected to an EMS, which is an example of a management system. Note that, "EMS" is an abbreviation of Element Management System.

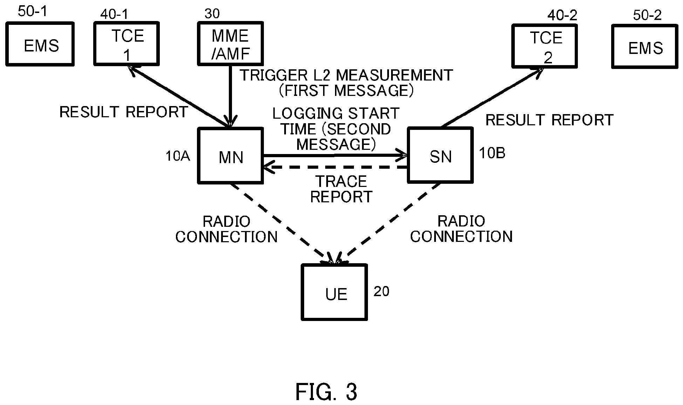

In other words, base station 10 communicates with at least one of terminal (UE) 20 (see FIG. 2), another base station 10, MME/AMF, TCE, and EMS (see FIG. 3).

For example, the communication between base station 10 and terminal 20 may be radio communication. The communication between base station 10 and at least one of the MME/AMF, TCE, and EMS may be wired communication or radio communication.

As illustrated in FIG. 1, base station 10 includes, for example, transmission section 101, reception section 102, and control section 103.

Transmission section 101 transmits a downlink (DL) signal to terminal 20. For example, transmission section 101 transmits the DL signal under the control of control section 103. The DL signal may include, for example, information indicating scheduling for signal transmission of terminal 20 (e.g., UL grant), or may include control information (e.g., Downlink Control Information (DCI)). In addition, the DL signal may include information (e.g., information on control or an instruction) on measurement (e.g., layer 2 (L2) measurement) relevant to the radio connection between base station 10 and terminal 20.

Further, transmission section 101 may transmit (report) the result of the L2 measurement to at least one of the upper node, the other base station 10, and the EMS, for example.

Further, for example, when the L2 measurement is triggered (or configured, activated, or initiated) by the upper node for base station 10, transmission section 101 may transmit time information indicating the start time of the L2 measurement to the other base station 10. The "time information indicating the start time of the L2 measurement" may be replaced with "information indicating the start timing of the L2 measurement."

The time information indicating the start time of the L2 measurement (hereinafter sometimes abbreviated as "L2 measurement time information") may illustratively be included in a signal (or message) that triggers the L2 measurement. Alternatively, the time information indicating the start time of the L2 measurement may be pre-configured in base station 10 (e.g., control section 103), for example.

Reception section 102 receives an uplink (UL) signal transmitted by terminal 20. For example, reception section 102 receives the UL signal under the control of control section 103.

Reception section 102 may receive, from the upper node, the signal for triggering the L2 measurement, or may receive, from the other base station 10, a result of the L2 measurement performed by the other base station 10 (L2 measurement report), for example.

Control section 103 controls a communication operation of base station 10 including a transmission process of transmission section 101 and a reception process of reception section 102.

For example, control section 103 receives data, control information, and the like from a higher layer, and outputs the data, control information, and the like to transmission section 101. Control section 103 also outputs data, control information, and the like received from reception section 102 to the higher layer.

Further, control section 103 may perform a control relevant to the L2 measurement (e.g., control on the start time of L2 measurement) for each terminal 20 connected to base station 10 based on the L2 measurement time information (or, in accordance with the L2 measurement time information). For example, control section 103 may generate a report including the result of the L2 measurement performed (L2 measurement report). The generated L2 measurement report may be transmitted by transmission section 101 to at least one of the upper node, the other base station 10, and the EMS, for example, as described above.

### <Configuration of Terminal>

FIG. 2 is a block diagram illustrating an example of the configuration of terminal 20. Terminal 20 includes reception section 201, transmission section 202, and control section 203, for example. Terminal 20 communicates with base station 10 by radio, for example.

Reception section 201 receives the DL signal transmitted by base station 10. For example, reception section 201 receives the DL signal under the control of control section 203.

Transmission section 202 transmits the UL signal to base station 10. For example, transmission section 202 transmits the UL signal under the control of control section 203. The UL signal may include, for example, the result of measurement by terminal 20 (e.g., control section 203). The measurement by terminal 20 may illustratively include at least one of a measurement relevant to RSRP and RSRQ and a measurement relevant to power headroom (PH).

Control section 203 controls a communication operation of terminal 20 including a reception process of reception section 201 and a transmission process of transmission section 202. For example, control section 203 receives data, control information, and the like from a higher layer, and outputs the data, the control information, and the like to transmission section 202. Control section 203 also outputs data, control information, and the like received, for example, from reception section 201 to the higher layer.

Further, control section 203 performs, for example, a control relevant to the measurement by terminal 20. The measurement by terminal 20 may be performed periodically or aperiodically. The aperiodic measurement may be performed in accordance with an instruction from base station 10, for example.

### <System Configuration Example>

FIG. 3 illustrates an example of a configuration of radio communication system 1. Radio communication system 1 illustrated in FIG. 3 (hereinafter sometimes abbreviated as "system 1") includes, for example, master node (MN) 10A, slave node (SN) 10B, and terminal (UE) 20.

An exemplary configuration of each of MN 10A and SN 10B may be the configuration described with reference to FIG. 1. In other words, one of MN 10A and SN 10B may correspond to a first base station, and the other one of MN 10A and SN 10B may correspond to a second base station. Note that, in system 1, the number of UEs 20 may be 2 or more, and the number of base stations may be 3 or more.

Further, MN 10A and SN 10B may correspond to either the eNB or the gNB. For example, both MN 10A and SN 10B may correspond to one of the eNB and the gNB, or one of MN 10A and SN 10B may correspond to the eNB, and the other one of MN 10A and SN 10B may correspond to the gNB. UE 20 is capable of establishing radio connection to both MN 10A and SN 10B simultaneously by DC.

As illustrated in FIG. 3, system 1 may include MME/AMF 30, TCE 40-1, and TCE 40-2 as examples of the upper node. System 1 may also include, for example, EMS 50-1 and EMS 50-2.

MME/AMF 30 is connected to MN 10A, for example, by wire or by radio. TCE 40-1 is connected to MN 10A, for example, by wire or by radio.

TCE 40-2 is connected to SN 10B, for example, by wire or by radio. In other words, TCE 40-1 and TCE 40-2 are provided correspondingly to MN 10A and SN 10B, respectively.

EMS 50-1 manages, for example, MN 10A, MME/AMF 30, and TCE 40-1. Thus, EMS 50-1 may be connected to MN 10A, MME/AMF 30, and TCE 40-1 by wire or by radio, for example.

EMS 50-2 manages, for example, SN 10B and TCE 40-2. Thus, EMS 50-2 may be connected to SN 10B and TCE 40-2 by wire or by radio, for example.

### <Proposal>

Hereinafter, a proposal for improving the L2 measurement for DC will be described.

### (Proposal 1)

As Proposal 1, in the DC state illustrated in FIG. 3, a Logging Start Time parameter for the L2 measurement is included in the first message indicated by the upper node (e.g., MME or AMF 30) to MN 10A as a trigger for the start of the L2 measurement. In addition, the Logging Start Time parameter for the L2 measurement is included in the second message (e.g., MDT configuration information). Note that, information or a parameter indicating one or both of a log interval and a log period may also be included in the second message (e.g., MDT configuration information).

MN 10A performs the L2 measurement for UE 20 based on the time information of the Logging Start Time parameter of the first message indicated by the upper node. In addition, SN 10B performs the L2 measurement for UE 20 based on the time information of the Logging Start Time parameter of the second message indicated by MN 10A. Moreover, each of MN 10A and SN 10B records a log time stamp according to the start of the L2 measurement.

According to Proposal 1, since MN 10A and SN 10B can perform the L2 measurement synchronously, it is possible to improve the L2 measurement for DC.

Note that, the time information may be expressed by, for example, an absolute time such as in XX hour(s) YY minute(s) ZZ second(s), or may be expressed by a relative time (e.g., an offset of several minutes or several seconds) with respect to a reception timing of the information.

When the absolute time is used, it is possible to accurately align (in other words, synchronize) the start times of the L2 measurements of MN 10A and SN 10B even if time synchronization between MN 10A and SN 10B is not guaranteed. In addition, when the absolute time is used, it is possible to accurately align the start times of the L2 measurements of MN 10A and SN 10B even if there is a propagation delay between MN 10A and SN 10B.

On the other hand, when the time synchronization between MN 10A and SN 10B is ensured, using the relative time (offset) allows a reduction in the amount of information to be indicated by MN 10A to SN 10B as compared with the case where the absolute time is used.

### (Proposal 2)

As Proposal 2, the time information indicating a trace start time of the L2 measurement is pre-configured for MN 10A and SN 10B. In this case, receiving the first message serves as a trigger to cause MN 10A to start the L2 measurement at the start time indicated by the pre-configured time information. Likewise, receiving the second message serves as a trigger to cause SN 10B to start the L2 measurement at the start time indicated by the pre-configured time information. Moreover, each of MN 10A and SN 10B records a log time stamp according to the start of the L2 measurement.

According to Proposal 2, since MN 10A and SN 10B can perform the L2 measurement synchronously, it is possible to improve the L2 measurement for DC.

Note that, Proposal 2 may be combined with Proposal 1. For example, SN 10B may start the L2 measurement at a candidate start time among pre-configured candidate start times of the L2 measurement which is the nearest to the time information of the Logging Start Time parameter received from MN 10A. When the nearest candidate start time that is the nearest to the time information of the Logging Start Time parameter received from MN 10A cannot be identified, SN 10B may ignore the time information received from MN 10A or determine that the time information received from MN 10A is invalid.

In this instance, SN 10B may record, as the measurement result, information indicating, for example, that the SN ignored the time information, that the SN determined the time information to be invalid, or that the SN was unable to identify the candidate start time. Such recording facilitates checking for an inconsistency during collation of trace reports, for example.

### (Proposal 3)

MS 10A and SN 10B may report the results of the L2 measurements to TCE 40-1 and TCE 40-2 corresponding to MS 10A and SN 10B, respectively, e.g., by the trace reports. TCE 40-1 and TCE 40-2 having received the trace reports collate the results of the L2 measurements with each other using a UE ID and a logging start time or log time stamp.

SN 10B may also transmit the measurement result (trace report) to MN 10A (see FIG. 3), and MN 10A may collate the trace report using the UE ID and the logging start time or log time stamp to report the L2 measurement results for each UE collectively to TCE 40-1 corresponding to MN 10A.

According to Proposal 3, since TCEs 40 that are one example of the upper node are capable of easily determining, for example, whether or not the L2 measurement by MN 10A and the L2 measurement by SN 10B are performed synchronously, it is possible to improve the L2 measurement for DC.

Note that, the trace report may be reported directly to TCE 40-1 or 40-2 from MN 10A or SN 10B, or may be reported to TCE 40-1 or 40-2 via EMS 50-1 or 50-2 from MN 10A or SN 10B.

### (Hardware Configuration)

Note that, the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

For example, the base station, terminal, and the like according to an embodiment of the present disclosure may function as a computer that executes processing of a radio communication method of the present disclosure. FIG. 8 illustrates an exemplary hardware configuration of the base station and the terminal according to one embodiment of the present disclosure. Physically, base station 10 and terminal 20 as described above may be a computer apparatus including processor 1001, memory 1002, storage 1003, communication apparatus 1004, input apparatus 1005, output apparatus 1006, bus 1007, and the like.

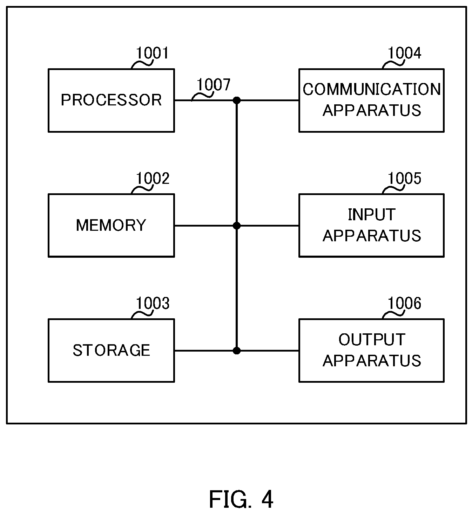

Note that the term "apparatus" in the following description can be replaced with a circuit, a device, a unit, or the like. The hardware configurations of base station 10 and of terminal 20 may include one apparatus or a plurality of apparatuses illustrated in FIG. 4 or may not include part of the apparatuses.

The functions of base station 10 and terminal 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103, control section 203, and the like described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 103 of base station 10 control section 203 of terminal 20 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification of Information and Signaling)

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### (Applied System)

The aspects and embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information or the like (see the item of "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### (Base Station (Radio Base Station))

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects and the embodiments of the present disclosure may find application in a configuration that results from replacing communication between the base station and the user terminal with communication between multiple user terminals (such communication may, e.g., be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

The reference signal can also be abbreviated as an RS and may also be called as a pilot depending on the applied standard.

The description "based on" used in the present disclosure does not mean "based only on," unless otherwise specified. In other words, the description "based on" means both of "based only on" and "based at least on."

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

The "section" in the configuration of each apparatus may be replaced with "means," "circuit," "device," or the like.

In a case where terms "include," "including," and their modifications are used in the present disclosure, these terms are intended to be inclusive like the term "comprising." Further, the term "or" used in the present disclosure is not intended to be an exclusive or.

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

One aspect of the present disclosure is useful, for example, for radio communication systems.

### Reference Signs List

10A Master Node (MN)
10B Slave Node (SN)
20 Terminal (UE)
30 MME/AMF
40-1, 40-2 TCE
50-1, 50-2 EMS
101, 202 Transmission section
102, 201 Reception section
103, 203 Control section
Further examples of the invention are as follows:
Example E1. A base station, comprising:
   a control section that controls a start time of a first measurement relevant to a first radio connection to a terminal based on an instruction on measurement; and
   a transmission section that transmits time information indicating the start time of the first measurement to another base station that performs a second measurement relevant to a second radio connection to the terminal.
Example E2. The base station according example E1, further comprising:
   a reception section that receives a result of the second measurement from the other base station, the second measurement being based on the time information.
Example E3. The base station according example E2, wherein
   the transmission section transmits a result of the first measurement and the result of the second measurement to an upper node.
Example E4. A base station, comprising:
   a reception section that receives time information from another base station, the time information indicating a start time of a first measurement relevant to a first radio connection to a terminal; and
   a control section that controls a start time of a second measurement relevant to a second radio connection to the terminal based on the time information.
Example E5. The base station according example E 4, further comprising:
   a transmission section that transmits a result of the second measurement to the other base station.

## Claims

1. Abase station comprising:
a control section that starts controlling a first measurement triggered by reception of a first message including parameters of the first measurement; and
a transmitting section that instructs another base station to start controlling a second measurement by transmitting a second message including parameters of the second measurement to the another base station,
wherein, the second message includes a parameter indicating a log interval of the second measurement and a parameter indicating a log period of the second measurement.

2. Abase station comprising:
a receiving section that receives a second message including parameters of a second measurement from another base station that starts controlling a first measurement triggered by reception of a first message including parameters of the first measurement; and
a control section that starts controlling the second measurement triggered by reception of the second message,
wherein, the second message includes a parameter indicating a log interval of the second measurement and a parameter indicating a log period of the second measurement.

3. A system including a first base station and a second base station that communicates with the first base station, wherein:
the first base station starts controlling a first measurement triggered by reception of a first message including parameters of the first measurement and transmits a second message including parameters of a second measurement to the second base station; and
the second base station starts controlling the second measurement triggered by reception of the second message,
wherein, the second message includes a parameter indicating a log interval of the second measurement and a parameter indicating a log period of the second measurement.

4. The system according to claim 3, wherein:
the first base station receives the first message from a first upper node and transmits a result of the first measurement to a second upper node different from the first upper node; and
the second base station transmits the result of the second measurement to a third upper node different from the first upper node and the second upper node.

5. A communication method, comprising the following performed by a first base station:
starting controlling a first measurement triggered by reception of a first message including parameters of the first measurement; and
instructing a second base station to start controlling a second measurement by transmitting a second message including parameters of the second measurement to the second base station,
wherein, the second message includes a parameter indicating a log interval of the second measurement and a parameter indicating a log period of the second measurement.
